Europäisches Patentamt

(19) European Patent Office

Office européen des brevets

(11) Numéro de publication: **0 043 763**
**B1**

(12) FASCICULE DE BREVET EUROPEEN

(45) Date de publication du fascicule du brevet:
03.10.84

(21) Numéro de dépôt: 81401053.4

(22) Date de dépôt: 01.07.81

(51) Int. Cl.³: **B 60 L 5/36,** B 60 L 5/16

(54) Dispositif de prise de courant sur caténaires pour véhicule et procédé s'y rapportant.

(30) Priorité: 04.07.80 FR 8014902

(43) Date de publication de la demande:
13.01.82 Bulletin 82/2

(45) Mention de la délivrance du brevet:
03.10.84 Bulletin 84/40

(84) Etats contractants désignés:
AT BE CH DE GB IT LI LU NL SE

(56) Documents cités:
CH - A - 171 571
DE - B - 2 827 371
FR - A - 366 374

(73) Titulaire: **FAIVELEY ENTREPRISES, 93, rue du Docteur-Bauer, F-93404 Saint-Ouen Cedex (FR)**

(72) Inventeur: **Georgelin, Alexandre, 130 rue Henri Litolff, F-92270 Bois Colombes (FR)**
Inventeur: **Vlassoff, Serge, 67-71 rue Pigalle, F-75009 Paris (FR)**

(74) Mandataire: **Bouju, André, Cabinet Bouju 38 avenue de la Grande Armée, F-75017 Paris (FR)**

## Description

La présente invention concerne un dispositif de prise de courant sur deux caténaires pour véhicule, notamment du genre trolleybus.

L'invention concerne également un procédé de mise en œuvre d'un tel dispositif.

Les dispositifs connus de ce genre sont généralement destinés aux véhicules de transport en commun urbain et comprennent le plus souvent des organes de liaison mobiles orientés, en fonctionnement normal, vers l'arrière du véhicule et vers le haut. Ces organes sont munis de deux capteurs à encoche pour coopérer avec les deux caténaires et sont associés à des moyens moteurs pour les actionner et les orienter en vue de leur branchement.

En raison de servitudes diverses, il existe dans les agglomérations des zones où l'installation de caténaires est impossible. Pour pallier cet inconvénient, le véhicule emporte une réserve d'énergie dans des accumulateurs. Mais, si le débranchement des capteurs s'effectue spontanément, le rebranchement après traversée de la zone en question nécessite une manœuvre qui peut être longue et délicate, et qui provoque une gêne considérable si elle doit se répéter fréquemment.

On a cherché à simplifier cette opération en installant sur le véhicule deux perches à manœuvre indépendantes munies à leur extrémité supérieure de guides permettant de ne pas laisser échapper les caténaires (respectivement de polarités positive et négative) au moment de la recherche du branchement. Mais cette recherche est rendue malaisée par la longueur et la flexibilité des perches et peut conduire à des fausses manœuvres si plusieurs paires de caténaires sont voisines.

On a également proposé l'utilisation d'une perche unique portant à son extrémité supérieure une traverse d'une longueur notablement supérieure à l'écartement des caténaires. Les capteurs sont situés sur des chariots roulant sur la traverse et, dès que la traverse vient au contact des caténaires, les chariots roulent l'un vers l'autre pour venir s'enclencher sur les caténaires. Outre qu'un tel mécanisme exposé à l'air libre est facilement encrassable, la présence d'une longue traverse constitue un encombrement nuisible, qui peut être une source d'accrochage avec des obstacles divers tels que, par exemple, la traverse d'un autre véhicule.

La présente invention vise à réaliser un dispositif de prise de courant qui permette un branchement automatique et qui présente un encombrement réduit au moins en dehors de l'opération de branchement.

Suivant l'invention, le dispositif de prise de courant sur deux caténaires est conforme à la description rappelée plus haut, et il est caractérisé en ce que les organes de liaison mobiles comprennent deux bras en V montés rotativement, par l'intermédiaire d'une partie coudée, à une extrémité d'une perche fixée au véhicule par son autre extrémité, les axes de rotation des bras étant inclinés sur la verticale et vers l'arrière par rapport au sens de déplacement normal du véhicule et une force exercée par des moyens élastiques ayant tendance à faire élever les bras et à les écarter l'un de l'autre tandis que la force mécanique exercée par les caténaires sur les bras fait abaisser les bras et les rapproche l'un de l'autre de manière à ce que les caténaires s'enclenchent dans les capteurs.

Pour faciliter l'abaissement des bras, ces derniers sont articulés sur un levier relié à l'extrémité de la perche par une articulation d'axe horizontal, des moyens élastiques tendent à faire tourner le levier dans le sens de l'élévation des bras, et des moyens de liaison mécanique sont prévus entre l'extrémité de la perche et les bras pour les faire écarter l'un de l'autre quand le levier s'élève et pour les rapprocher quand le levier s'abaisse.

Avant tout contact avec les caténaires, les bras sont à la fois en position haute et écartée par un effet élastique prédominant sur l'effet de pesanteur précité. Une fois le contact établi, l'avance du véhicule provoque, par réaction mécanique des caténaires s'ajoutant à la pesanteur, leur abaissement et leur fermeture. Le glissement des bras sur les caténaires s'achève quand les capteurs d'extrémités viennent s'enclencher sur les caténaires.

Suivant une réalisation avantageuse de l'invention, les moyens de liaison mécanique précités comprennent deux pignons fixés respectivement sur les parties coudées des bras et coopérant avec une double crémaillère fixée à l'extrémité de la perche.

On obtient ainsi la combinaison du déplacement vertical des bras avec leur mouvement d'ouverture-fermeture. En outre, les mouvements latéraux des bras sont conjugués, ce qui assure la symétrie du mouvement de fermeture.

Suivant une réalisation perfectionnée de l'invention, le levier est relié à l'extrémité de la perche par l'intermédiaire d'une bielle de liaison elle-même fixée à l'extrémité de la perche par une articulation d'axe approximativement horizontal et parallèle à la direction d'avance du véhicule.

Grâce à cette articulation, les capteurs demeurent facilement au même niveau, même si le véhicule s'écarte de la ligne des caténaires, ou si la chaussée présente un dévers. On n'a donc pas à craindre de débranchement.

De préférence, la perche comprend au moins trois tiges parallèles articulées sur des pièces d'extrémité pour permettre à la pièce d'extrémité supérieure de se déplacer parallèlement à elle-même.

Ces tiges, dont certaines peuvent être remplacées par des câbles, donnent à la perche une structure de prisme à faces en parallélogrammes, ce qui conserve l'orientation de la pièce d'extrémité quand la perche se déplace. On conserve en particulier l'orientation mentionnée plus haut de l'axe des bras.

Suivant un perfectionnement important de l'invention, chaque bras est recouvert d'un revêtement conducteur sur une partie de sa longueur adjacente à l'extrémité portant le capteur, ce revêtement étant connecté par un câble de liaison aux organes électriques du véhicule.

Grâce à cette disposition, dès que les bras touchent les caténaires, le véhicule est alimenté et peut démarrer pour parachever l'opération de branchement. En outre, si les bras encadrent accidentellement deux caténaires n'appartenant pas à la même paire, et de même polarité, l'alimentation incorrecte est un signal de branchement défectueux.

Les capteurs de courant sont avantageusement montés sur des supports à rotule et connectés aux revêtements conducteurs des bras, et les rotules sont munies de moyens élastiques tendant à diriger les encoches des bras respectifs l'une vers l'autre.

Les encoches en position d'attente sont alors dirigées pour recevoir le caténaire en position optimale.

Les moyens élastiques liés aux rotules comprennent alors avantageusement les connexions des capteurs aux revêtements conducteurs.

Grâce aux caractéristiques qui viennent d'être exposées, le procédé de branchement sur caténaire peut se caractériser par la succession des opérations suivantes:

a) on élève les deux bras vers les caténaires en les écartant l'un de l'autre de manière que leurs extrémités portant les capteurs se situent à l'extérieur des caténaires et au-dessus d'elles;

b) on poursuit l'élévation des bras jusqu'à ce qu'ils touchent respectivement les caténaires;

c) on fait avancer le véhicule pour provoquer, par réaction mécanique des caténaires, l'abaissement et la fermeture progressive des bras, provoquant l'enclenchement des capteurs sur les caténaires.

D'autres particularités et avantages de l'invention ressortiront encore de la description détaillée qui va suivre.

Aux dessins annexés, donnés à titre d'exemple non limitatif:

– la figure 1 est une vue d'ensemble, en perspective, d'un véhicule équipé d'un dispositif conforme à l'invention;

– la figure 2 est une vue semi-schématique en élévation des bras et de la partie supérieure de la perche;

– la figure 3 est une vue en perspective, à grande échelle, de l'extrémité inférieure de la perche;

– la figure 4 est une vue en perspective, à grande échelle, de l'extrémité supérieure de la perche;

– la figure 5 est une vue en coupe en élévation d'un capteur de courant;

– la figure 6 est une vue en plan suivant VI-VI de la figure 5;

– la figure 7 est une vue schématique en plan destinée à expliquer le processus de branchement.

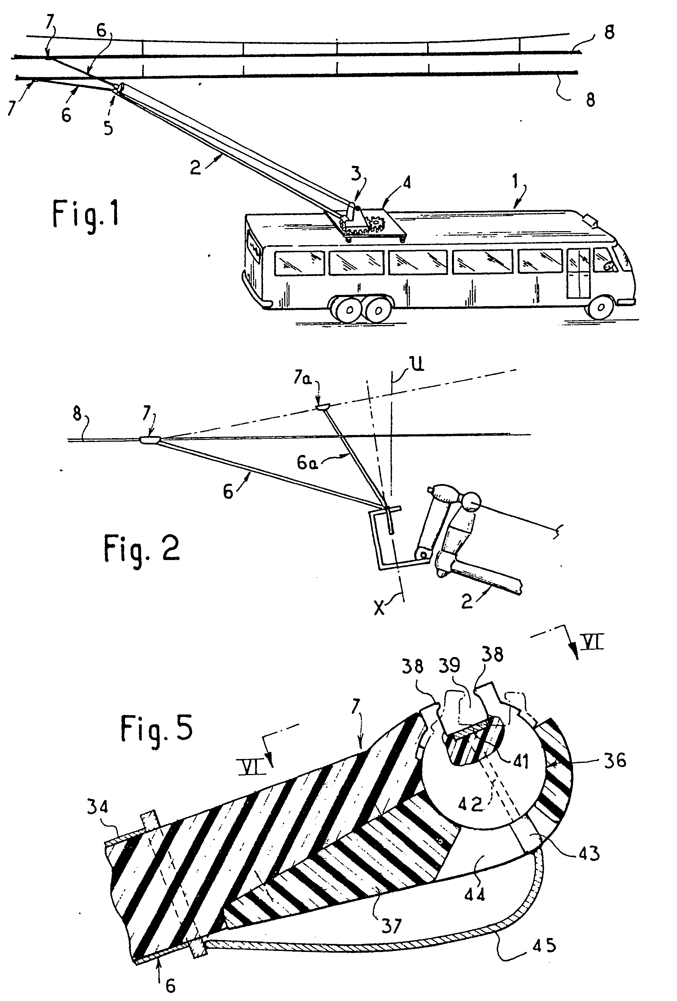

En référence à la figure 1, un véhicule 1, tel qu'un trolleybus, est muni d'un organe de liaison constitué par une perche 2 dont l'extrémité inférieure 3 est fixée au véhicule par l'intermédiaire d'un dispositif d'orientation débrayable 4, et dont l'extrémité supérieure 5 porte deux bras 6 en V dont les extrémités sont constituées par des capteurs de courant 7 enclenchés sur des caténaires 8.

Les bras 6 sont articulés à l'extrémité 5 de la perche 2 de manière notamment à pouvoir faire varier l'angle qu'ils font entre eux (figure 2). Ils peuvent tourner autour d'un axe X incliné par rapport à la verticale U et vers l'arrière par rapport au sens de déplacement normal du véhicule. En raison de cette inclinaison, un bras amené en position très écartée 6a aura tendance, sous l'effet de la pesanteur, à revenir dans la position relativement fermée 6. Le capteur qui était en position 7a, en dehors des caténaires, revient alors dans la position d'enclenchement 7.

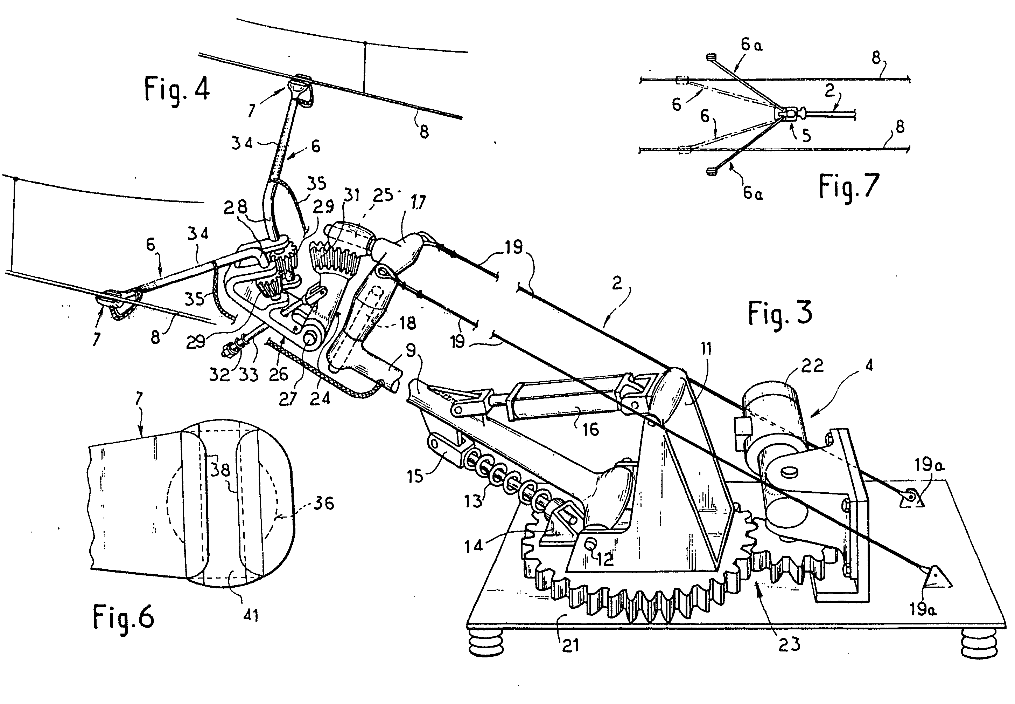

On va maintenant décrire en détail, en référence aux figures 3 et 4, la perche 2 et ses extrémités 3 et 5.

La perche 2 est constituée d'une barre rigide 9 articulée à son extrémité inférieure sur un socle 11 par l'intermédiaire d'un axe 12 (figure 3). Un ressort 13, comprimé entre une portée 14 solidaire du socle 11 et une portée 15 solidaire de la barre 9, tend à faire monter la perche. Un vérin 16 articulé d'une part sur le socle 11 et d'autre part sur la barre 9 est monté pour abaisser la perche quand il s'allonge. Grâce à des dispositions connues (non représentées), l'alimentation du vérin est agencée pour provoquer l'abaissement de la perche quand le véhicule ne reçoit pas de courant des caténaires. Quand le vérin est relâché, la perche s'élève sous l'action du ressort 13.

La perche 2 porte une pièce d'extrémité supérieure 17 articulée sur la perche par un axe 18 et rattachée par deux câbles 19 à deux ancrages 19a fixés sur le véhicule. Schématiquement, la perche 2 est donc constituée par un prisme à base triangulaire dont les faces sont des parallélogrammes, ce qui assure que la pièce d'extrémité 17 se déplace toujours parallèlement à elle-même quand l'inclinaison de la perche varie.

Le socle 11 est monté rotativement sur une embase 21 solidaire du véhicule et sa rotation est commandée par un ensemble moteur-réducteur 22 par l'intermédiaire d'engrenages 23. L'ensemble moteur-réducteur 22 est débrayable ou parfaitement réversible.

Le pièce d'extrémité supérieure 17 (figure 4) porte une bielle 24 articulée sur elle suivant un axe 25 approximativement horizontal quand la perche 2 est en position de fonctionnement, et dirigé approximativement suivant la direction d'avance du véhicule.

Sur la bielle 24 est articulé un levier 26 par l'intermédiaire d'un axe horizontal transversal 27. Sur ce levier sont articulées des parties coudées 28 des bras 6 suivant une orientation définie plus haut en référence à la figure 2. Ces parties coudées portent chacune un pignon conique 29 coopérant avec une double crémaillère 31 solidaire de la bielle 24. Pour plus de clarté, on a représenté sur la figure 4 les pignons 29 dégagés de la crémaillère, dans une position qui ne se présente jamais en fonctionnement normal.

On comprend que, grâce à cet agencement, une élévation des bras 6 s'accompagne d'un écartement (ouverture du V) et que leur abaissement s'accompagne d'un rapprochement (fermeture du V). En outre, les mouvements de rotation des bras sont conjugués.

Un ressort 32 est comprimé entre le levier 26 et l'extrémité d'une tige 33 fixée à la bielle 24 de manière à tendre à relever le levier 26. La raideur de ce ressort est déterminée de façon que son action soit prépondérante par rapport à l'action de pesanteur mentionnée plus haut. Au repos, les bras 6 occupent donc leur position la plus élevée 6a (figure 2) par rapport à l'horizontale et leur écartement est maximal.

La partie non coudée des bras 6 porte un revêtement 34 conducteur de l'électricité qui s'étend jusqu'au voisinage des capteurs de courant 7. A leur extrémité opposée, les revêtements 34 sont connectés à des câbles 35 reliés aux organes électriques (non représentés) du véhicule.

On va maintenant décrire en détail, en référence aux figures 5 et 6, le capteur de courant 7.

Ce capteur comprend une rotule 36 en matériau isolant emprisonnée dans l'extrémité du bras par l'intermédiaire d'une pièce démontable 37. A sa partie supérieure, cette rotule présente deux becs souples 38 ménageant entre eux une encoche 39 pour le caténaire. Au fond de l'encoche est placé un plot conducteur 41.

Le plot 41 est connecté à un conducteur 42 qui traverse la rotule 36 et qui est lui-même connecté à un ergot 43 pouvant se déplacer dans une cavité 44 pratiquée dans la pièce 37. Enfin l'ergot 43 est relié par un connecteur 45 au revêtement conducteur 34.

Le connecteur 45 forme ressort et tend à pousser l'ergot 43 vers l'extrémité du bras, de sorte que l'encoche 39 est dirigée vers l'encoche (non représentée) de l'autre bras et mise en position de recevoir le caténaire glissant sur le bras. Si les bras 6 tendent à se fermer, les capteurs 7 tendent à se rapprocher mais sont retenus par les caténaires. La rotule 36 tourne et l'encoche vient se placer dans la position représentée en trait mixte.

Le fonctionnement du dispositif ainsi décrit est le suivant.

La liaison étant supposée établie avec les caténaires, le véhicule évolue normalement. Les défauts de niveau des caténaires ainsi que l'inclinaison éventuelle du véhicule due à des dévers de la chaussée sont absorbés par la rotation de l'axe 25. Si le véhicule s'écarte des caténaires, le moteur-réducteur 22 débrayé (ou réversible) laisse la perche 2 s'orienter convenablement, la pièce d'extrémité supérieure 17 restant toujours parallèle à elle-même grâce à l'articulation 18, de sorte que les bras 6 ne sont pas affectés par ce déplacement.

Si le véhicule parvient à un endroit où les caténaires sont interrompus, par exemple dans un carrefour très encombré, les capteurs de courant 7 se déconnectent spontanément. L'alimentation électrique étant coupée, la perche 2 s'abaisse et vient se coucher sur le toit du véhicule.

Le véhicule continue sa route en utilisant une réserve d'énergie contenue dans des accumulateurs. Parvenu en un point où il retrouve des caténaires, il est nécessaire de procéder à un branchement des capteurs.

Pour effectuer ce branchement, on élève la perche 2 en relâchant le vérin 16 en même temps qu'on l'oriente vers la paire de caténaires au moyen du moteur-réducteur 22. Les bras 6 sont alors au repos et tendent d'une part à s'abaisser en se rapprochant du fait de la pesanteur et d'autre part à s'élever en s'écartant du fait de l'action du ressort 32. Cette dernière action étant prépondérante, les bras s'élèvent et s'écartent.

On poursuit cette élévation jusqu'à ce que les bras, en position 6a (figure 7) embrassent les caténaires et viennent les toucher par leurs revêtements conducteurs 34. Le véhicule est alors alimenté par les caténaires et le conducteur le remet en route.

L'action mécanique d'abaissement exercée par les caténaires 8 sur les bras 6 vient alors s'ajouter à l'action de la pesanteur et l'action du ressort 32 cesse d'être prépondérante. Les bras s'abaissent progressivement et se rapprochent jusqu'à venir en position 6 (figure 7) où les caténaires s'enclenchent dans les capteurs.

Si plusieurs paires de caténaires sont en présence et si les bras s'engagent sur deux caténaires appartenant à des paires différentes, les polarités de ces caténaires sont les mêmes et le véhicule n'est pas alimenté. Le conducteur abaisse alors la perche et modifie son orientation pour recommencer la manœuvre.

L'invention permet d'effectuer le branchement de façon très rapide, sans que le conducteur ne quitte son poste et sans même qu'il ait à contrôler de visu le déroulement convenable de l'opération. L'encombrement du dispositif est en outre très réduit et aucun accrochage n'est à craindre en route ou pendant le branchement.

Bien entendu, l'invention n'est pas limitée à l'exemple décrit et l'on pourrait concevoir de multiples variantes sans sortir de son cadre, notamment dans la réalisation mécanique des diverses liaisons. On pourrait également supprimer les revêtements conducteurs des bras sans porter atteinte au principe de l'invention.

**Revendications**

1. Dispositif de prise de courant sur deux caténaires pour véhicule, comprenant des organes de liaison mobiles (2, 6) orientés, en fonctionnement normal, vers l'arrière du véhicule (1) et vers le haut et munis de deux capteurs (7) à encoche pour coopérer avec les deux caténaires (8), et des moyens moteurs pour actionner et orienter ces organes, caractérisé en ce que ces organes comprennent deux bras (6) en V montés rotativement, par l'intermédiaire d'une partie coudée (28), à une extrémité (5) d'une perche (2) fixée au véhicule (1) par son autre extrémité (3), les axes de rotation (X) des bras (6) étant inclinés sur la verticale (U) et vers l'arrière par rapport au sens de déplacement normal du véhicule et une force exercée par des moyens élastiques (32) ayant tendance à faire élever les bras (6) et à les écarter l'un de l'autre tandis que la force mécanique exercée par les caténaires (8) sur les bras (6) fait abaisser les bras (6) et les rapproche l'un de l'autre de manière à ce que les caténaires (8) s'enclenchent dans les capteurs (7).

2. Dispositif conforme à la revendication 1, caractérisé en ce que les bras (6) sont articulés sur un levier (26) relié à l'extrémité de la perche (2) par une articulation d'axe horizontal (27), des moyens élastiques (32) tendant à faire tourner le levier (26) dans le sens de l'élévation des bras (6), des moyens de liaison mécanique (29, 31) étant prévus entre l'extrémité (5) de la perche (2) et les bras (6) pour les faire écarter l'un de l'autre quand le levier (26) s'élève et pour les rapprocher quand le levier s'abaisse.

3. Dispositif conforme à la revendication 2, caractérisé en ce que les moyens de liaison mécanique précités comprennent deux pignons (29) fixés respectivement sur les parties coudées (28) des bras (6) et coopérant avec une double crémaillère (31) fixée à l'extrémité (5) de la perche (2).

4. Dispositif conforme à l'une des revendications 2 ou 3, caractérisé en ce que le levier (26) est relié à l'extrémité de la perche par l'intermédiaire d'une bielle (24) de liaison elle-même fixée à l'extrémité (5) de la perche (2) par une articulation (25) d'axe approximativement horizontal et parallèle à la direction d'avance du véhicule (1).

5. Dispositif conforme à l'une des revendications 1 à 4, caractérisé en ce que la perche (2) comprend au moins trois tiges parallèles (9, 19) articulées sur des pièces d'extrémité pour permettre à la pièce d'extrémité supérieure (17) de se déplacer parallèlement à elle-même.

6. Dispositif conforme à l'une des revendications 1 à 5, caractérisé en ce que chaque bras (6) est recouvert d'un revêtement conducteur (34) sur une partie de sa longueur adjacente à l'extrémité portant le capteur (7), ce revêtement étant connecté par un câble de liaison (35) aux organes électriques du véhicule (1).

7. Dispositif conforme à la revendication 6, caractérisé en ce que les capteurs de courant (7) sont montés sur des supports à rotule (36) et connectés aux revêtements conducteurs (34) des bras (6).

8. Dispositif conforme à la revendication 7, caractérisé en ce que les rotules (36) sont munies de moyens élastiques tendant à diriger les encoches (39) des bras respectifs l'une vers l'autre.

9. Dispositif conforme à la revendication 8, caractérisé en ce que les moyens élastiques liés aux rotules (36) comprennent les connexions (45) des capteurs (7) aux revêtements conducteurs (34).

10. Procédé pour mettre en œuvre un dispositif conforme à l'une des revendications 1 à 9, caractérisé en ce qu'on effectue successivement les opérations suivantes:

a) on élève les deux bras vers les caténaires en les écartant l'un de l'autre de manière que leurs extrémités portant les capteurs se situent à l'extérieur des caténaires et au-dessus d'elles;

b) on poursuit l'élévation des bras jusqu'à ce qu'ils touchent respectivement les caténaires;

c) on fait avancer le véhicule pour provoquer, par réaction mécanique des caténaires, l'abaissement et la fermeture progressive des bras, provoquant l'enclenchement des capteurs sur les caténaires.

## Claims

1. Collector device for supplying current from overhead contact wires to a vehicle, comprising movable coupling members (2, 6) oriented upwards and toward the rear of the vehicle (1) during normal operation and fitted with two recessed current collectors (7) for cooperating with the two overhead contact wires (8), and driving means for actuating and orienting these coupling members, characterized in that these members comprise two arms (6) disposed in a V and rotatably mounted by means of an elbowed portion (28) at one end (5) of a pole (2), the other end (3) of which is attached to the vehicle (1), the axes of rotation (X) of the arms (6) being inclined to the vertical (U) and to the rear with respect to the direction of normal travel of the vehicle and a force exerted by resilient means (32) being such as to have a tendency to raise the arms (6) and to move them away from each other whilst the mechanical force exerted by the overhead contact wires (8) on the arms (6) has the effect of lowering the arms (6) and moving them toward each other so that the overhead contact wires (8) engage within the collectors (7).

2. Device in accordance with claim 1, characterized in that the arms (6) are pivotally mounted on a lever (26) which is connected to the end of the pole (2) by means of a horizontal cross-pin (27), resilient means (32) being such as to have a tendency to cause rotational displacement of the lever (26) in the direction of lifting of the arms (6), mechanical coupling means (29, 31) being provided between the end (5) of the pole (2) and the arms (6) in order to move them away from each other when the lever (26) moves upwards and in order to draw them together when the lever moves downwards.

3. Device in accordance with claim 2, characterized in that the mechanical coupling means aforesaid comprise two pinions (29) which are fixed respectively on the elbowed portions (28) of the arms (6) and cooperate with a double toothed rack (31) attached to the end (5) of the pole (2).

4. Device in accordance with either of claims 2 or 3, characterized in that the lever (26) is coupled to the end of the pole by means of a link-arm (24) which is in turn attached to the end (5) of the pole (2) by means of a pivot-pin (25) having an axis approximately horizontal and parallel to the direction of forward travel of the vehicle (1).

5. Device in accordance with any one of claims 1 to 4, characterized in that the pole (2) comprises at least three parallel rods (9, 19) pivotally attached to the end members in order to permit displacement of the upper end member (17) in a direction parallel to itself.

6. Device in accordance with any one of claims 1 to 5, characterized in that each arm (6) is covered with a conductive sheath (34) over a part of its length adjacent to the end which carries the collector (7), this sheath being connected by means of a connecting cable (35) to the electrical elements of the vehicle (1).

7. Device in accordance with claim 6, characterized in that the current collectors (7) are mounted on spherical bearing members (36) and connected to the conductive sheaths (34) of the arms (6).

8. Device in accordance with claim 7, characterized in that the spherical bearing members (36) are fitted with elastic means having a tendency to direct the recesses (39) of the respective arms toward each other.

9. Device in accordance with claim 8, characterized in that the elastic means coupled to the spherical bearing members (36) comprise the connections (45) between the collectors (7) and the conductive sheaths (34).

10. Method for the practical application of a device in accordance with any one of claims 1 to 9, characterized in that the following operations are performed in succession:

a) the two arms are lifted toward the overhead contact wires while moving them away from each other so as to ensure that the arm-ends carrying the collectors are located on the outside of the overhead contact wires and above these latter;

b) upward displacement of the arms is continued until said arms come respectively into contact with the overhead contact wires;

c) the vehicle is moved forward in order to initiate lowering and progressive closing of the arms as a result of mechanical reaction of the overhead contact wires, thereby causing the collectors to engage on the overhead wires.

**Patentansprüche**

1. Stromabnehmervorrichtung für Fahrzeuge an zwei Kettenfahrleitungen, mit beweglichen Verbindungselementen (2, 6), die im Normalbetrieb zur Rückseite des Fahrzeugs (1) und nach oben orientiert sind und mit zwei gekerbten Abnehmern (7) zur Zusammenwirkung mit den zwei Kettenfahrleitungen (8) ausgestattet sind, und mit Antriebsmitteln zur Betätigung und Orientierung dieser Elemente, dadurch gekennzeichnet, dass diese Elemente zwei V-förmige Arme (6) umfassen, die über ein abgewinkeltes Teil (28) an einem Ende (5) einer Stange (2) drehbar gelagert sind, die an ihrem anderen Ende (3) am Fahrzeug (1) befestigt ist, wobei die Rotationsachsen (X) der Arme (6) gegenüber der Senkrechten (U) und in bezug auf die normale Bewegungsrichtung des Fahrzeugs nach hinten geneigt sind, und wobei eine von elastischen Mitteln (32) ausgeübte Kraft bestrebt ist, die Arme (6) anzuheben und auseinanderzuspreizen, während die von den Kettenfahrleitungen (8) auf die Arme (6) ausgeübte mechanische Kraft die Arme (6) absenkt und so aneinander annähert, dass die Kettenfahrleiter (8) in die Abnehmer (7) einrücken.

2. Vorrichtung nach Anspruch 1, dadurch gekennzeichnet, dass die Arme (6) an einem Hebel (26) angelenkt sind, der mit dem Ende der Stange (2) über ein Gelenk mit waagrechter Achse (27) verbunden ist, und dass elastische Mittel (32) vorgesehen sind, die bestrebt sind, den Hebel (26) in Richtung des Anhebens der Arme (6) zu drehen, wobei mechanische Verbindungsmittel (29, 31) zwischen dem Ende (5) der Stange (2) und den Armen (6) vorgesehen sind, um sie auseinanderzuspreizen, wenn der Hebel (26) angehoben wird, und aneinander anzunähern, wenn der Hebel abgesenkt wird.

3. Vorrichtung nach Anspruch 2, dadurch gekennzeichnet, dass die mechanischen Verbindungsmittel zwei Ritzel (29) umfassen, die jeweils an abgewinkelten Teilen (28) der Arme (6) befestigt sind und mit einer doppelten Zahnstange (31) zusammenwirken, die an dem Ende (5) der Stange (2) befestigt ist.

4. Vorrichtung nach Anspruch 2 oder 3, dadurch gekennzeichnet, dass der Hebel (26) an dem Ende der Stange über ein Verbindungspleuel (24) befestigt ist, das seinerseits an dem Ende (5) der Stange (2) über ein Gelenk (25) befestigt ist, dessen Achse im wesentlichen horizontal und parallel zur Fortbewegungsrichtung des Fahrzeugs (1) ist.

5. Vorrichtung nach einem der Ansprüche 1 bis 4, dadurch gekennzeichnet, dass die Stange (2) wenigstens drei parallele Stäbe (9, 19) umfasst, die an Endstücken angelenkt sind, um dem oberen Endstück (17) zu gestatten, sich parallel zu sich selbst zu bewegen.

6. Vorrichtung nach einem der Ansprüche 1 bis 5, dadurch gekennzeichnet, dass jeder Arm (6) auf einem Teil seiner Länge, der an das den Abnehmer (7) tragende Ende angrenzt, mit einer leitfähigen Beschichtung (34) bedeckt ist, die über ein Verbindungskabel (35) mit den elektrischen Elementen des Fahrzeugs (1) verbunden ist.

7. Vorrichtung nach Anspruch 6, dadurch gekennzeichnet, dass die Stromabnehmer (7) auf Kugelkopflagern (36) gelagert sind und mit den leitfähigen Beschichtungen (35) der Arme (6) verbunden sind.

8. Vorrichtung nach Anspruch 7, dadurch gekennzeichnet, dass die Kugelkopfgelenke (36) mit elastischen Mitteln versehen sind, die bestrebt sind, die Aussparungen (39) der Arme gegeneinander zu führen.

9. Vorrichtung nach Anspruch 8, dadurch gekennzeichnet, dass die mit den Kugelkopfgelenken (36) verbundenen elastischen Mittel die Verbindungen (45) der Abnehmer (7) mit den leitfähigen Beschichtungen (35) umfassen.

10. Verfahren zur Inbetriebnahme einer Vorrichtung nach einem der Ansprüche 1 bis 9, dadurch gekennzeichnet, dass nacheinander folgende Arbeitsgänge durchgeführt werden:

a) die beiden Arme werden gegen die Kettenfahrleitungen angehoben, indem sie voneinander so gespreizt werden, dass ihre die Abnehmer tragenden Enden sich auf der Aussenseite der Kettenfahrleitungen und über diesen befinden;

b) das Anheben der Arme wird fortgeführt, bis sie jeweils die Fahrdrahtleitung berühren;

c) das Fahrzeug wird vorwärtsbewegt, um durch mechanische Reaktion der Kettenfahrleitungen das Absenken und progressive Schliessen der Arme hervorzurufen, welches das Einrükken der Abnehmer auf den Kettenfahrleitungen hervorruft.

**0 043 763**

Fig.1

Fig. 2

Fig. 5

Fig.7

Fig.3

Fig.4

Fig.6